# FASCICULE DE BREVET EUROPEEN

(11) **EP 4 559 769 B1**
(45) Date de publication et mention de la délivrance du brevet: **28.01.2026**
(21) Numéro de dépôt: 24210466.9
(22) Date de dépôt: 04.11.2024
(51) Int. Cl.: B60T 17/22, B60T 8/17, B64D 45/00, F16D 66/00

(54) **PROCEDE DE SURVEILLANCE DE LA TEMPERATURE DE FREINS D'UN TRAIN D'ATTERRISSAGE D'UN AERONEF**
VERFAHREN ZUR ÜBERWACHUNG DER TEMPERATUR DER BREMSEN EINES FLUGZEUGFAHRWERKS
METHOD FOR MONITORING THE TEMPERATURE OF THE BRAKES OF AN AIRCRAFT LANDING GEAR

(30) Priorité: 22.11.2023 FR 2312882
(43) Date de publication de la demande: 28.05.2025
(73) Titulaire: Airbus Operations (S.A.S.), 31060 Toulouse Cedex 9 (FR)
(72) Inventeur: LARAKI, Mohamed, 31060 TOULOUSE (FR)
(74) Mandataire: Airbus-OPS SAS

(56) Documents cités:
- CN-A- 108 382 384
- US-A1- 2015 145 703

## Description

### DOMAINE TECHNIQUE

La présente invention concerne un procédé et un dispositif de surveillance de la température de freins d'un train d'atterrissage, comme par exemple un train d'atterrissage principal ou « *Main Landing Gear* » (MLG), d'un aéronef. Plus particulièrement, l'invention concerne une détection pour chacun des freins d'un même train d'atterrissage, d'un écart entre une température maximale estimée d'un frein et une température maximale réelle mesurée dudit frein.

### ETAT DE LA TECHNIQUE ANTERIEURE

Les fonctions principales d'un train d'atterrissage consistent à permettre l'évolution au sol d'un aéronef. En particulier, un train d'atterrissage permet de contrôler : les manœuvres de roulage entre les différents emplacements d'un aérodrome (i.e., remorquage, taxi...etc.), la course de décollage, l'amortissement de l'impact d'atterrissage, et, grâce à un système de freinage associé, l'arrêt de l'aéronef sur une distance acceptable.

Généralement, chaque roue d'un train d'atterrissage est équipée d'un système de freinage comprenant notamment des freins, ainsi que des capteurs de température situés sur ou à proximité de ces freins. Lorsque les freins d'un train d'atterrissage sont activés, leur température augmente. Les capteurs de température mesurent donc la température de chaque frein individuellement et transmettent ensuite ces mesures à des unités de surveillance de la température des freins (« *Brake Temperature Monitoring Unit* ») respectives, situées sur le train d'atterrissage. Dans un exemple, un train d'atterrissage comprend quatre roues donc quatre freins et donc quatre unités de surveillance associées. Chaque unité de surveillance transmet ensuite les données de température des freins à une unité de contrôle du freinage et de pilotage (« *Braking and Steering Control Unit* »), intégrée dans des systèmes avioniques de l'aéronef.

Avant un décollage, pour assurer la sécurité de l'exploitation de l'aéronef, et éviter la dégradation de ses performances, les freins ne doivent pas dépasser une température limite (par exemple, supérieure à 400°C). Il peut s'agir, par exemple, d'éviter que les freins ne chauffent à des températures supérieures à leur plage de fonctionnement sécuritaire.

L'unité de contrôle du freinage et de pilotage surveille l'évolution de la température des freins au cours d'un atterrissage donné, mais également sur une période prédéfinie au cours de laquelle plusieurs atterrissages ont eu lieu.

Ainsi, à l'issue de l'atterrissage, lorsque la température d'au moins un des freins d'un train d'atterrissage est supérieure au seuil prédéfini, l'unité de contrôle du freinage et de pilotage transmet *via* une interface Homme-machine de l'ECAM (« *Electronic Centralized Aircraft Monitor* » ou moniteur électronique centralisé des aéronefs) un message d'alerte à l'attention de l'équipage en cas de comportement anormal des freins. Par exemple, si la température d'un frein est supérieure à 100°C, un message informant de la possibilité de faire décoller l'aéronef apparaît sur une interface Homme-machine de l'ECAM. Si la température dépasse 300°C, un message indiquant que le décollage doit être retardé pour laisser les freins refroidir apparaît sur l'interface Homme-machine de l'ECAM.

Dans un autre exemple, l'unité de contrôle du freinage et de pilotage permet de détecter une éventuelle asymétrie de la température des freins d'un même train d'atterrissage. Une asymétrie peut être le résultat de conditions de freinage anormales telles que : une oxydation de la garniture de frein, un freinage résiduel ou des freins desserrés. Ainsi, si l'asymétrie de température entre les freins atteint un seuil de maintenance prédéfini, noté S (par exemple 150°C), alors un message d'alerte, généré par l'unité de contrôle du freinage et de pilotage puis transmis à l'ECAM par exemple, indique qu'une action ou une vérification de maintenance est requise (par exemple : réparation de frein, remplacement de frein, etc.).

Cependant, selon cette technique, il est difficile d'identifier avec précision quel frein, ou quels autres équipements du train d'atterrissage (par exemple : roue, équipement du système de freinage, etc.) du train d'atterrissage génère l'asymétrie de température entre les freins et nécessite une action ou vérification de maintenance (par exemple : réparation, remplacement, etc.).

En effet, une température maximale anormalement élevée pour un frein peut influencer la valeur de la température maximale d'un autre frein du train d'atterrissage.

Il est alors souhaitable de pallier ces inconvénients de l'état de la technique.

Il est notamment souhaitable de fournir une solution qui permette de surveiller l'évolution dans le temps de la température maximale de chaque frein d'un même train d'atterrissage de manière individuelle et ainsi anticiper les actions de maintenance à effectuer sur des freins ou tout autre équipement du train d'atterrissage (par exemple : roues, capteurs, etc.). En outre, il est souhaitable de fournir une solution permettant d'identifier avec précision quel frein, ou quels autres équipements du train d'atterrissage (par exemple : roues, capteurs...etc.) requiert une action ou une vérification de maintenance.

Le document US2015145703 décrit une méthode de surveillance des composants d'un système d'atterrissage d'un aéronef de l'état de la technique.

Le document CN108382384 décrit un système de détection de pannes basée sur le couple et la température des freins de l'état de la technique.

### EXPOSE DE L'INVENTION

Il est proposé ici un procédé de surveillance d'une température maximale atteinte pendant un atterrissage par un frein d'un train d'atterrissage d'un aéronef. Le procédé est implémenté par un dispositif de surveillance, tel que revendiqué dans la revendication 1.

Ainsi, il est possible de surveiller la température de chaque frein d'un train d'atterrissage à l'atterrissage de chaque roue de manière indépendante. Une alerte est alors déclenchée lorsqu'une grande différence est observée entre la température mesurée et la température estimée du frein analysé, ce qui permet d'anticiper des opérations de maintenances sur les différents éléments du train d'atterrissage.

Il est aussi proposé ici un dispositif de surveillance, tel que revendiqué à la revendication 9.

Il est aussi proposé ici un aéronef, tel que revendiqué à la revendication 10.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1 illustre sous forme de diagramme les étapes du procédé de surveillance de la température maximale d'un frein d'un train d'atterrissage d'un aéronef au cours d'un atterrissage, selon un mode de réalisation ;
La figure 2 illustre sous forme de diagramme une étape préliminaire de caractérisation de paramètres de freinage, selon un mode de réalisation ;
La figure 3 illustre sous forme de graphique un exemple de résultat obtenu après implémentation du procédé de surveillance de la température maximale d'un frein d'un train d'atterrissage d'un aéronef au cours d'un atterrissage, selon un mode de réalisation ;
La figure 4 illustre sous forme de graphique un autre exemple de résultat obtenu après implémentation du procédé de surveillance de la température maximale d'un frein d'un train d'atterrissage d'un aéronef au cours d'un atterrissage, selon un mode de réalisation ;
La figure 5 illustre schématiquement un exemple d'architecture matérielle d'un dispositif de surveillance selon un mode de réalisation ; et
La figure 6 illustre schématiquement, en vue de côté, un aéronef équipé d'un dispositif de surveillance, selon un mode de réalisation.

### EXPOSE DETAILLE DE MODES DE REALISATION

Le principe général de l'invention concerne la surveillance de la température maximale atteinte par chacun des freins d'un même train d'atterrissage d'un aéronef (par exemple : train d'atterrissage principal), indépendamment les uns des autres, lors de leur activation. Plus spécifiquement, c'est l'écart, ou erreur, entre une température maximale dite « estimée » et une température maximale dite « réelle » ou « mesurée » d'un frein qui est contrôlé pour chaque frein d'un train d'atterrissage lors de l'activation de ces derniers.

Par la suite, afin d'illustrer le procédé décrit ci-après, on considère que l'activation des freins se fait pendant un atterrissage de l'aéronef. Il est à noter que l'activation des freins du train d'atterrissage de l'aéronef peut également avoir lieu pendant un roulage, ou pendant une phase de décollage de l'aéronef lors de situations d'urgence.

Par la suite, on entend par « atterrissage » ou « phase d'atterrissage » la période s'étendant du moment où l'aéronef touche le sol (i.e., phase de vol n°8) au moment où les moteurs de l'aéronef sont coupés (i.e., phase de vol n°10). Dans un mode de réalisation, une marge est prise avant la phase de vol n°8 (par exemple : 1 minute) et/ou après la phase de vol n°10 (par exemple : 10 minutes), pour s'assurer de couvrir tout l'atterrissage.

La température maximale estimée est obtenue grâce à l'utilisation par un dispositif de surveillance, noté DISP, d'un modèle de prédiction de la température maximale d'un frein qui est atteinte lors d'un atterrissage (aussi simplement appelé par la suite modèle de prédiction). Plus particulièrement, ce modèle de prédiction est implémenté dans un module d'apprentissage automatique du dispositif de surveillance DISP (e.g., algorithme d'intelligence artificielle). Afin d'obtenir ce modèle de prédiction, un modèle d'apprentissage automatique est entrainé (phase d'entraînement) à associer des valeurs de paramètres, dits « paramètres de freinage », à la température maximale atteinte par chaque frein du train d'atterrissage telle qu'elle a été mesurée pendant un ensemble d'atterrissages de référence. A l'issue de cette phase d'entrainement, le modèle de prédiction est utilisé (phase d'utilisation) pour estimer la température maximale de chaque frein du train d'atterrissage à partir de nouvelles valeurs des paramètres de freinage obtenues pour un nouvel atterrissage, ce qui permet de comparer la température maximale ainsi estimée avec une valeur de température maximale effectivement mesurée pendant ce nouvel atterrissage.

Par la suite, on entend par « paramètre de freinage » des paramètres capables d'exercer une influence sur la température des freins pendant l'atterrissage de l'aéronef (i.e., faire augmenter la température des freins, ou faire diminuer la température des freins pendant l'atterrissage). Dans un exemple, ces paramètres de freinage sont : la pression de freinage, la température statique de l'air, la vitesse du vent et sa direction, l'accélération verticale, la durée d'application d'une poussée inverse des moteurs, la pression de freinage alternative, la durée d'activation d'un anti-dérapant ( ou « *Anti-skid* » en anglais), la durée d'activation d'un ventilateur de frein, la durée de l'atterrissage, le poids brut de l'aéronef, l'énergie de freinage, la vitesse de rotation des roues du train d'atterrissage à l'atterrissage, etc.

Grâce à ce modèle de prédiction, il est possible d'estimer, pour chaque atterrissage, la température maximale atteinte de chacun des freins du train d'atterrissage de manière individuelle dans des conditions dites « nominales » d'atterrissage pour un type d'aéronef donné (i.e., conditions classiques d'atterrissage d'un aéronef en supposant que les freins ne nécessitent pas d'action ou de vérification de maintenance).

Ainsi, il est possible pour un atterrissage considéré, de comparer la température maximale estimée de chacun des freins à la température maximale réelle mesurée de ces freins pendant cet atterrissage. En fonction de l'écart, ou erreur, entre ces températures maximales estimées et mesurées, un message d'alerte est généré par le dispositif de surveillance DISP afin de notifier l'équipage (par exemple *via* l'interface Homme-machine de l'ECAM) et/ou le personnel au sol par le biais d'une communication air-sol, d'un besoin de maintenance à vérifier et/ou à effectuer sur l'un des freins et/ou un autre équipement du train d'atterrissage (par exemple : roue, capteur, etc.).

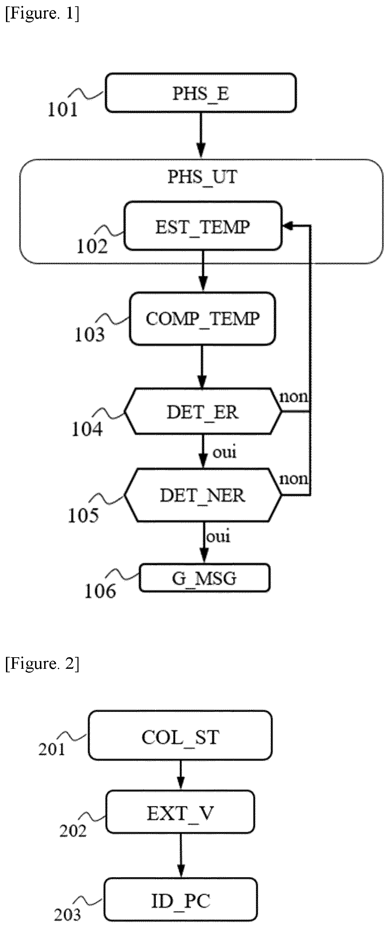

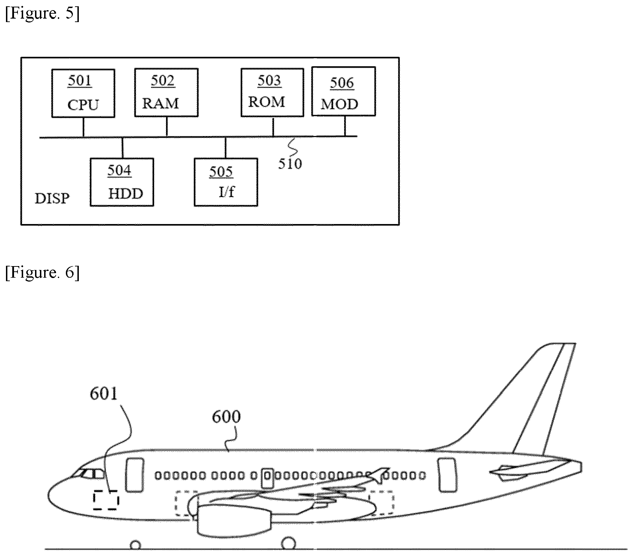

La **Figure 1** illustre sous forme de diagramme les étapes du procédé de surveillance de la température maximale atteinte lors d'un atterrissage des freins d'un train d'atterrissage selon un mode de réalisation. Ce procédé de surveillance de la température maximale des freins est implémenté dans le dispositif de surveillance DISP, tel que décrit par la suite en lien avec la **Figure 5****.**

Le dispositif de surveillance DISP comprend de la circuiterie électronique configurée notamment pour collecter en temps-réel auprès d'un ou plusieurs capteurs (par exemple capteur de température) et/ou de systèmes d'information de l'aéronef (par exemple : unité de contrôle du freinage et de pilotage (« *Braking and Steering Control Unit* ») ou BSCU ou calculateur de données aérodynamiques ou ADC pour « *Air Data Computer* » en anglais), des informations sur : la température de chaque frein du train d'atterrissage de l'aéronef, dont la température initiale des freins au début de la phase d'atterrissage, des paramètres de freinage (par exemple : durée activation des ventilateurs de freins, durée de l'inversion de la poussée des moteurs, etc.).

Au cours d'une étape préliminaire (non représentée), ces paramètres de freinage sont caractérisés. Ces paramètres de freinage seront ensuite utilisés pour la phase d'entrainement du modèle d'apprentissage automatique et la phase d'utilisation du modèle de prédiction.

Il est à noter que, dans un mode de réalisation particulier, il est possible de classifier ces paramètres de freinage selon leur influence sur la température des freins lors de l'atterrissage. En effet, certains paramètres de freinage influencent la température des freins de manière plus importante que d'autres. Ainsi, afin de limiter le nombre de données, parmi les paramètres de freinage identifiés précédemment, seulement ceux ayant une influence sur la température des freins lors de l'atterrissage plus importante que d'autres seront utilisés pour la phase d'entrainement du modèle d'apprentissage automatique et la phase d'utilisation du modèle de prédiction.

La **Figure 2** illustre ainsi sous forme de diagramme une étape préliminaire de caractérisation des paramètres de freinage selon un mode de réalisation.

Au cours d'une sous-étape 201 COL_ST, des données concernant les paramètres de freinage sont obtenues auprès d'un ou plusieurs capteurs et/ou d'un système d'information de l'aéronef, comme l'ADC. Cette collecte de données est effectuée sur une période prédéfinie correspondant à une fenêtre de vol caractéristique de la phase d'atterrissage de l'aéronef telle que définie précédemment. En outre, cette collecte de données se fait selon un taux d'échantillonnage prédéfini pour chaque paramètre de freinage. En effet, le taux d'échantillonnage des paramètres de freinage dépend de la fréquence d'enregistrement du capteur ou système en question, par exemple 2Hz.

Ainsi, pour une période correspondant à la phase d'atterrissage de l'aéronef, une série temporelle de valeurs pour chaque paramètre de freinage est obtenue.

Afin de simplifier le modèle de prédiction, au cours d'une sous-étape 202 EXT_V, ces séries temporelles de valeurs sont traitées pour extraire des valeurs caractéristiques des paramètres de freinage. Autrement dit, une seule valeur caractéristique du paramètre de freinage est extraite au lieu d'avoir toute l'évolution des valeurs de la série temporelle pour ce paramètre de freinage. Par exemple, il est possible d'extraire, à partir d'une série temporelle de valeurs correspondant à l'évolution de la température des freins pendant toute la phase d'atterrissage, une valeur caractéristique qui est la température maximale des freins à l'atterrissage. Globalement, à partir des séries temporelles, des valeurs caractéristiques sont extraites pour être utilisées comme données d'entrée pour le modèle de prédiction.

Il est ainsi possible de caractériser, au cours d'une sous-étape 203 ID_PC, des paramètres de freinage pour l'estimation de la température maximale des freins.

En conséquence, à l'issue de l'étape préliminaire, les paramètres de freinage sont caractérisés pour pouvoir être utilisés pour entrainer le modèle d'apprentissage automatique. Ainsi, au cours de la phase d'utilisation du modèle de prédiction, l'estimation de la température maximale atteinte par les freins pendant la phase d'atterrissage prend en compte ces différents paramètres de freinage qui influencent la température des freins lors de la phase d'atterrissage. Ainsi, l'entrainement, puis l'utilisation du modèle de prédiction pour l'estimation de la température maximale des freins pendant la phase d'atterrissage, sont effectués à partir de données d'entrée (ou valeurs) caractéristiques de ces paramètres de freinage.

Ainsi, au cours d'une étape 101 PHS_E correspondant à la phase d'entrainement du modèle d'apprentissage automatique pour l'obtention du modèle de prédiction, ce dernier est entrainé à associer des valeurs caractéristiques de paramètres de freinage à une température maximale mesurée atteinte pour chaque atterrissage d'un ensemble d'atterrissages qui sert de référence. Ce modèle d'apprentissage automatique est par exemple implémenté par un module d'intelligence artificielle MOD 506 du dispositif du surveillance DISP.

Pour cela, le dispositif de surveillance DISP obtient d'un ou plusieurs capteurs et/ou systèmes d'information de l'aéronef (par exemple : système ADC), pour chaque atterrissage d'un ensemble d'atterrissages dit « de référence », des valeurs caractéristiques dites « de référence » de paramètres de freinage et de température maximale d'un frein atteinte lors de chaque atterrissage de l'ensemble d'atterrissage de référence. On entend par atterrissage de référence, un atterrissage pour lequel les valeurs des paramètres de freinage et de température maximale des freins atteinte lors des atterrissages sont des valeurs standards servant de référence, acceptées et en conformité avec un grand nombre de mesures.

Il est à noter que le modèle d'apprentissage automatique est entrainé pour chaque frein du train d'atterrissage indépendamment des autres. En effet, un frein peut avoir tendance à se comporter différemment selon son côté, etc. C'est pourquoi le modèle d'apprentissage automatique est entraîné pour chaque frein indépendamment, et pour chaque aéronef.

En outre, tous les paramètres de freinage identifiés au cours de l'étape préliminaire doivent être disponibles pour que le vol soit considéré comme valide pour être pris en compte par le modèle d'apprentissage automatique. Dans le cas contraire, le vol est considéré comme invalide et les données de l'atterrissage ne sont pas prises en compte pour l'entrainement du modèle d'apprentissage automatique, puis pour l'utilisation du modèle de prédiction.

Ainsi, le dispositif de surveillance DISP obtient, pour chaque frein du train d'atterrissage et pour chaque atterrissage de l'ensemble d'atterrissages de référence, les valeurs caractéristiques de référence de :
(i) Paramètres de freinage tels que : l'énergie de freinage et la puissance maximale de freinage, la durée d'activation des ventilateurs de frein, la durée d'inversion de la poussée des moteurs ; la durée de l'atterrissage correspondant à la durée entre le moment où la vitesse maximale de rotation de la roue associée au frein est atteinte et le moment où la température maximale du frein est atteinte, la température initiale du frein correspondant à la moyenne des valeurs de la température du frein obtenues pendant un intervalle de temps prédéfini correspondant au début de la phase d'atterrissage ; la durée entre le moment où la température maximale du frein est atteinte et le moment où la vitesse de rotation de la roue atteint la valeur du percentile de 95 %, la température de l'air statique ; la moyenne de la vitesse au sol ; la valeur maximale de la vitesse au sol; somme des courants appliqués par une servovalve agissant comme organe de contrôle hydraulique du système de freinage ; altitude moyenne (i.e., l'altitude moyenne pendant la phase d'atterrissage par rapport au niveau de la mer) ; numéro de série du fabricant de l'aéronef ou MSN (« *Manufacturer's Serial Number* » en anglais) ; un identifiant de type de moteur de l'aéronef (chaque moteur ayant des puissances notamment d'inversion de poussée différentes) ; un identifiant de modèle d'aéronef (chaque modèle d'aéronef ayant des caractéristiques aérodynamiques différentes, par exemple) ;
(ii) la température maximale du frein atteinte pendant l'atterrissage. Il est à noter que si la température maximale est inférieure à une température minimale prédéfinie, ou si la température maximale est supérieure à une température maximale prédéfinie, alors le vol est considéré comme invalide et les données ne sont pas prises en compte pour l'entrainement du modèle d'apprentissage automatique.

Les valeurs caractéristiques de référence de ces paramètres de freinage, ainsi que la température maximale des freins sont alors utilisées comme données d'entrée pour entrainer le modèle d'apprentissage automatique et ainsi obtenir le modèle de prédiction.

Dans un mode de réalisation, ces données d'entrée sont utilisées pour entrainer un algorithme d'apprentissage automatique de régression par empilement. En effet, ce type d'algorithme d'apprentissage automatique donne d'excellentes performances avec une erreur absolue moyenne d'environ 15°C (environ 7%). Il s'agit d'une méthode d'ensemble qui combine plusieurs modèles, et qui consiste à empiler les résultats de chaque estimateur et à utiliser un régresseur pour calculer la prédiction finale.

Le modèle d'apprentissage automatique est donc entrainé sur la base des valeurs caractéristiques de référence des paramètres de freinage et de température maximale des freins de l'ensemble d'atterrissages de référence afin d'obtenir le modèle de prédiction. Ce modèle de prédiction est ensuite utilisé dans une phase d'utilisation pour estimer la température maximale de chaque frein, pour un nouvel atterrissage *i* (*i* un entier supérieur à 0).

Ainsi, au cours de la phase d'utilisation (notée PHS_UT) du modèle de prédiction par le dispositif de surveillance DISP, *via* son module d'intelligence artificiel MOD 506, le dispositif de surveillance DISP obtient (de la même manière que pour la phase d'entrainement décrite précédemment) les valeurs des paramètres de freinage, ainsi que la température maximale atteinte par chacun des freins du train d'atterrissage pour un nouvel atterrissage i.

Le dispositif de surveillance DISP, à partir des paramètres de freinage décrits ci-dessus, *via* le modèle de prédiction, estime, au cours d'une étape 102 EST_TEMP, une température maximale atteinte par chaque frein d'un train d'atterrissage pour ce nouvel atterrissage i.

Toutefois, afin de renforcer l'estimation de la température maximale atteinte par un frein et de réduire le risque de surajustement, la température maximale de freinage estimée pour un frein est calculée comme une somme pondérée de deux modèles de prédiction d'un couple de freins pour le même train d'atterrissage. Pour un couple de freins donné du train d'atterrissage, le facteur de pondération définit alors le poids de chaque frein dans l'estimation de la température maximale de freinage. En d'autres termes, pour un frein X analysé, la température maximale estimée prend en compte la température maximale estimée, *via* le modèle de prédiction, d'un autre frein Y du même train d'atterrissage.

Une fois que la température maximale est estimée à l'aide du modèle de prédiction, le dispositif de surveillance DISP implémente une phase de comparaison des températures estimée et mesurée comprenant les étapes 103 à 106 décrites ci-après.

Au cours d'une étape 103 COMP_TEMP, pour chaque frein, le dispositif de surveillance DISP compare la température maximale estimée *via* l'utilisation du modèle de prédiction et la température maximale mesurée en temps-réel lors de l'atterrissage i.

Plus particulièrement, le dispositif de surveillance DISP détermine un écart, ou une erreur entre la température maximale estimée et la température maximale mesurée pour l'atterrissage i. Pour cela, le dispositif de surveillance DISP détermine : la moyenne glissante sur une fenêtre glissante de N (N un entier supérieur à 0) atterrissages de la température maximale estimée d'un frein analysé (par exemple frein X), la moyenne glissante sur la fenêtre glissante de N atterrissages de la température maximale atteinte par ce frein analysé, la température maximale de freinage mesurée d'un autre frein (du couple de frein comprenant le frein analysé et un autre frein, par exemple frein Y) du même train d'atterrissage pour limiter la différence entre la température de freinage maximale estimée et celle mesurée sur l'autre frein du même train d'atterrissage.

Il est à noter que la température maximale de freinage mesurée de l'autre frein est obtenue à partir de la moyenne glissante de la température maximale estimée du frein analysé, de la moyenne glissante sur la fenêtre glissante de N atterrissages de la température maximale atteinte par cet autre frein et d'un paramètre permettant de limiter l'impact de la température mesurée réelle pour l'autre frein sur le calcul de l'erreur. Sans ce paramètre de limitation de la température mesurée réelle pour l'autre frein l'erreur serait très élevée, mais uniquement à cause de la différence entre la température estimée du frein analysé et celle mesurée de l'autre frein.

Il est à noter que la fenêtre glissante de N atterrissages correspond un nombre, fixe, de N atterrissages précédents l'atterrissage courant *i*, pour un même aéronef et un même frein. En d'autres termes, pour chaque nouveau vol, on prend en compte les N derniers vols de manière glissante, c'est-à-dire que pour un vol *i+1*, le vol *i* est ajouté à la fenêtre glissante de N atterrissages et le vol le plus ancien est retiré de cette fenêtre glissante.

Puis, selon un mode de réalisation particulier, le dispositif de surveillance DISP détermine la température estimée synthétique comme la somme pondérée de la moyenne glissante de la température maximale estimée du frein X et de la température maximale de freinage mesurée du frein Y du même train d'atterrissage. Le facteur de pondération correspondant à l'impact de la proportion du frein Y sur la température maximale de freinage estimée. A partir de la moyenne glissante de la température maximale estimée du frein analysé et de la température estimée synthétique, le dispositif de surveillance DISP détermine l'erreur absolue moyenne (MAE) des différences entre les valeurs réelles et les valeurs estimées synthétiques, et l'erreur absolue moyenne symétrique en pourcentage (SMAPE).

Finalement, le dispositif de surveillance DISP détermine l'erreur entre la température estimée et la température mesurée comme la somme pondérée de l'erreur absolue moyenne (MAE) et de l'erreur absolue moyenne symétrique en pourcentage (SMAPE), où le facteur de pondération est la proportion d'erreurs absolues et relatives. Les erreurs absolues facilitent la détection des températures anormalement élevées, tandis que les erreurs relatives facilitent la détection des températures anormalement basses.

Une stratégie de détection des anomalies des freins est ensuite appliquée par le dispositif de surveillance DISP, sur la base de l'erreur entre les températures maximales mesurées et les températures maximales estimées du frein analysé.

Ainsi, au cours d'une étape 104 DET_ER, à partir du calcul de cette erreur, ou écart, entre les températures maximales estimée et mesurée du frein analysé pour l'atterrissage d'un vol courant i donné, le dispositif de surveillance DISP détermine si cette erreur est supérieure à :
- un premier seuil prédéfini S1, lorsque la température maximale mesurée est supérieure à la température maximale estimée ;
- un deuxième seuil prédéfini S2, lorsque la température maximale mesurée est inférieure à la température maximale estimée.

Il est ainsi possible de détecter différentes catégories de problèmes au niveau des freins (ou d'un autre équipement du train d'atterrissage) car une température maximale mesurée trop élevée (i.e., la température maximale mesurée est supérieure à la température maximale estimée) ou une température maximale mesurée trop basse (i.e., la température maximale mesurée est inférieure à la température maximale estimée) sont représentatives de problèmes différents. Pour remédier à ces problèmes, des actions de maintenance ou de vérification de maintenance propres à chaque problème sont typiquement appliquées.

Dans un exemple, quand il y a une usure importante des freins, ou un frottement du piston, le frein en question aura tendance à chauffer plus que l'attendue (i.e., température maximale mesurée supérieure à la température maximale estimée). Dans un autre exemple, lorsqu'une servovalve ou un capteur de pression est défaillant, la température maximale du frein peut être plus basse que celle attendue (i.e., la température maximale mesurée est inférieure à la température maximale estimée).

Dans un autre exemple, une température maximale mesurée inférieure ou supérieure à la température maximale estimée peut être représentative d'un capteur de température des freins qui indique une température anormalement très faible ou au contraire très élevée (« drift » par exemple).

Si la température mesurée est supérieure au seuil prédéfini S1 ou au seuil prédéfini S2, alors, au cours de l'étape 105 DET_NER, le dispositif de surveillance DISP détermine si au cours d'un ensemble d'atterrissages comprenant les N vols précédents de la fenêtre glissante et le vol courant i, le nombre, noté NT, total de fois où l'erreur est supérieure au seuil prédéfini S1 ou S2 (selon le cas) est supérieure à un troisième seuil prédéfini S3.

Ainsi, lorsque le nombre NT est supérieur au troisième seuil prédéfini S3, alors le dispositif de surveillance DISP, au cours de l'étape 106 G_MSG, génère un message d'alerte à l'attention de l'équipage et/ou du personnel au sol. Autrement dit,
- un message d'alerte pour le frein considéré est généré si la température maximale mesurée du frein est anormalement élevée, c'est-à-dire si le nombre NT de fois où la température mesurée du frein est supérieure à la température maximale estimée plus le seuil prédéfini S1 (par exemple : 60°C), dépasse le seuil prédéfini S3 ;
- un message d'alerte pour le frein considéré est généré si la température maximale mesurée du frein est anormalement basse, c'est-à-dire si le nombre NT de fois où la température mesurée du frein est inférieure à la température maximale estimée moins un seuil prédéfini S2 (par exemple : 60°C), dépasse le seuil prédéfini S3.

Ce message d'alerte est par exemple transmis à l'ECAM pour un affichage sur son interface Homme-machine à l'attention de l'équipage. Alternativement ou additionnellement, le message d'alerte est transmis à un système de contrôle au sol pour un affichage sur une interface Homme-machine à l'attention du personnel au sol.

Dans un mode de réalisation, ce message d'alerte est un message textuel indiquant qu'un frein identifié, par exemple à l'aide d'un identifiant, dans ce message d'alerte a une température anormalement élevée ou basse et nécessite une action ou vérification de maintenance. Dans un mode de réalisation, ce message d'alerte comporte en outre une indication d'un type de maintenance ou de vérification à effectuer.

Dans un mode de réalisation, ce message d'alerte est adapté selon les différentes situations décrites ci-dessous (i.e., message différent selon la situation rencontrée). En particulier, un tel message d'alerte adapté comporte :
- une information sur une première catégorie de problème et une information sur une première catégorie d'action ou de vérification de maintenance à effectuer qui est adaptée à la première catégorie de problème, lorsque la température maximale mesurée est supérieure à la température maximale estimée et que l'erreur entre la température maximale estimée et la température maximale mesurée est supérieure au premier seuil prédéfini S1, ou
- une information sur une deuxième catégorie de problème et une information sur une deuxième catégorie d'action ou de vérification de maintenance à effectuer qui est adaptée à la deuxième catégorie de problème, lorsque la température maximale mesurée est inférieure à la température maximale estimée et que l'erreur entre la température maximale estimée et la température maximale mesurée est supérieure au deuxième seuil prédéfini S2.

Dans un exemple, lorsque l'erreur entre la température maximale estimée et la température maximale mesurée est supérieure au premier seuil prédéfini S1, lorsque la température maximale mesurée est supérieure à la température maximale estimée, alors le message d'alerte indique qu'il y a une usure importante des freins, ou un frottement du piston, ou un souci avec un capteur de température, et qu'une action de remplacement ou de vérification de ces équipements doit être effectuée.

Dans un autre exemple, lorsque l'erreur entre la température maximale estimée et la température maximale mesurée est supérieure au deuxième seuil prédéfini S2, lorsque la température maximale mesurée est inférieure à la température maximale estimée, alors le message d'alerte indique qu'il y a un problème avec une servovalve ou un capteur de température du système de freinage et qu'une action de réparation ou de vérification de cette servovalve ou du capteur de température doit être effectuée.

Seul un message d'alerte pour un frein et par train d'atterrissage est déclenché à la fois afin d'éviter les alertes pour le même problème. Une anomalie dans un frein (en particulier dans le cas d'un frein dont la température est inférieure à la température estimée) peut avoir un impact sur le comportement normal de freinage d'un autre frein du même train d'atterrissage.

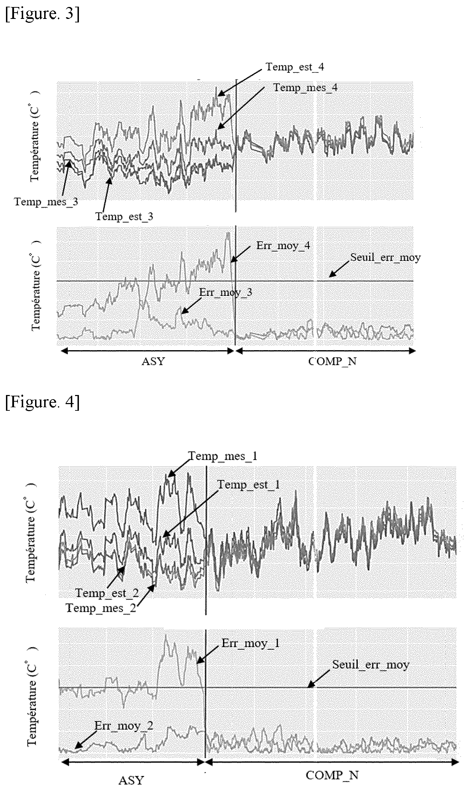

La **Figure 3** représente sous forme de graphique un exemple de résultat obtenu après implémentation du procédé de surveillance, selon un mode de réalisation.

Dans cet exemple, les valeurs maximales moyennes estimées de la température des freins numéros 3 et 4 (notées respectivement Temp_est_3 et Temp_est_4), ainsi que les valeurs réelles, mesurées de la température des freins 3 et 4 (notées respectivement Temp_mes_3 et Temp_mes_4) sont représentées pour le même aéronef et le même train d'atterrissage (voir graphique du haut de la Figure. 3).

L'erreur moyenne entre la température maximale estimée et la température maximale mesurée pour les freins 3 et 4 (notée respectivement Err_moy_3 et Err_moy_4) est également représentée (voir graphique du bas de la Figure. 3).

Outre l'asymétrie de température entre les freins 3 et 4, le modèle de prédiction estime avec précision les températures maximales des freins 3 et 4 (COMP_N).

Grâce à l'utilisation du modèle de prédiction décrit ci-dessus, le dispositif de surveillance DISP est capable d'anticiper une asymétrie de température entre la température maximale estimée et la température maximale mesurée pour chacun des freins du train d'atterrissage de manière indépendante et donc d'identifier avec précision quel frein nécessite une action ou vérification de maintenance.

L'erreur, ou écart, de température entre les températures maximales estimée et mesurée du frein 4 continue d'augmenter (ASY) jusqu'à ce qu'un message d'alerte soit généré. Autrement dit, lorsque le nombre de fois où la température maximale mesurée est supérieure à la température maximale estimée du seuil prédéfini S1 (par exemple 60°C) sur une pluralité d'atterrissages est supérieure au seuil prédéfini S3, alors le dispositif de surveillance DISP génère un message d'alerte.

Au contraire, l'erreur, ou écart, de température entre les températures maximales estimée et mesurée pour le frein 3 est faible, c'est-à-dire inférieure au seuil prédéfini S1.

Ainsi, le dispositif de surveillance DISP est capable de détecter avec précision quel frein nécessite une action ou une vérification de maintenance. Dans cet exemple, le frein 4 est le frein qui nécessite l'action de maintenance ou la vérification de maintenance.

Une fois l'action ou la vérification de maintenance effectuée, l'erreur, ou écart, entre les températures maximales estimée et mesurée tend vers des valeurs faibles (COMP_N).

La **Figure 4** représente sous forme de graphique un autre exemple de résultat obtenu après implémentation du procédé de surveillance, selon un mode de réalisation.

Avant l'action de maintenance (ASY), la température du frein 1 mesurée a tendance à être plus élevée que la température maximale estimée pour ce frein. Il s'agit probablement d'un effet d'oxydation au freinage, ce qui entraine que le frein 1 chauffe plus que prévu. Après le remplacement des freins (COMP _N), le modèle de prédiction prédit avec précision la température maximale de freinage à chaque atterrissage correspondant à la température maximale dans des conditions nominales.

Ainsi, le dispositif de surveillance DISP peut, grâce à l'utilisation du modèle de prédiction, détecter la plupart des événements d'asymétrie de température entre une température maximale estimée et une température maximale mesurée avec un taux de confiance de 100%.

Le dispositif de surveillance DISP, *via* le modèle de prédiction, est capable de détecter également des défauts nécessitant une maintenance tels que : usure des freins, frottement des roues et problèmes de capteurs. Par exemple, il est possible de détecter :
- usure des freins ou frottement des roues ;
- problèmes de capteurs ;
- cas de freins anormalement froids, par exemple liés à une servovalve ou un capteur de pression défaillant.

La **Figure 5** illustre schématiquement un exemple d'architecture matérielle du dispositif de surveillance DISP, qui comprend alors, reliés par un bus de communication 510 : un processeur ou CPU (« *Central Processing Unit* » en anglais) 501 ; une mémoire vive RAM (« *Random Access Memory* » en anglais) 502 ; une mémoire morte ROM (« *Read Only Memory* » en anglais) 503, par exemple une mémoire Flash ; un dispositif de stockage de données, tel qu'un disque dur HDD (« *Hard Disk Drive* » en anglais), ou un lecteur de support de stockage, tel qu'un lecteur de cartes SD (« *Secure Digital* » en anglais) 504 ; au moins une interface de communication 505 permettant au dispositif de surveillance DISP d'interagir avec différents capteurs et/ ou systèmes avioniques .

Le processeur 501 est capable d'exécuter des instructions chargées dans la RAM 502 à partir de la ROM 503, d'une mémoire externe (non représentée), d'un support de stockage, tel qu'une carte SD, ou d'un réseau de communication (non représenté). Lorsque le dispositif de surveillance DISP est mis sous tension, le processeur 501 est capable de lire de la RAM 502 des instructions et de les exécuter. Ces instructions forment un programme d'ordinateur causant l'implémentation, par le processeur 501, des comportements, étapes et l'algorithme décrits ici.

Dans un mode de réalisation, le dispositif de surveillance DISP comprend en outre un module d'intelligence artificielle MOD 506 configuré pour implémenter un modèle d'apprentissage automatique pendant la phase d'entrainement PHS_E, puis pour l'utilisation du modèle de prédiction pendant la phase d'utilisation PHS_UT tel que décrit ici.

Dans une variante, le dispositif de surveillance DISP comprend le module d'intelligence artificielle MOD 506 configuré pour utiliser le modèle de prédiction pendant la phase d'utilisation PHS_UT tel que décrit ici. Ce module d'intelligence artificielle MOD 506 étant préalablement entrainé pendant la phase d' entrainement PHS_E dans un dispositif différent du dispositif de surveillance DISP.

Tout ou partie des comportements, étapes et l'algorithme décrits ici peut ainsi être implémenté sous forme logicielle par exécution d'un ensemble d'instructions par une machine programmable, telle qu'un DSP (« *Digital Signal Processor* » en anglais) ou un microcontrôleur, ou être implémenté sous forme matérielle par une machine ou un composant (« *chip* » en anglais) dédié ou un ensemble de composants (« *chipset* » en anglais) dédié, tel qu'un FPGA (« *Field-Programmable Gate Array* » en anglais) ou un ASIC (« *Application-Specific Integrated Circuit* » en anglais). D'une manière générale, le dispositif de surveillance DISP comprend de la circuiterie électronique agencée et configurée pour implémenter les comportements, étapes et l'algorithme décrits ici.

Dans un exemple de réalisation, le dispositif de surveillance DISP peut être implémenté parallèlement à un BTSM, pour fournir une fonctionnalité améliorée et/ou une redondance.

Dans un exemple de réalisation, le dispositif de surveillance DISP peut être intégré à un système avionique de l'aéronef 600 décrit en lien avec la Figure. 6, ou peut être connecté à un système avionique de n'importe quelle manière appropriée, de sorte que le dispositif de surveillance DISP puisse communiquer des valeurs estimées de température de freinage au système avionique de l'aéronef 600. Par exemple, le dispositif de surveillance DISP peut être intégré ou connecté à un contrôleur d'un BTMS de l'aéronef 600.

La **Figure 6** illustre schématiquement, en vue de côté, un aéronef 600 équipé d'un dispositif de surveillance DISP 601, selon un mode de réalisation. Selon le mode de réalisation de la Figure. 6, le dispositif de surveillance DISP 601 appartient au système avionique de l'aéronef 600.

Dans d'autres exemples, le dispositif de surveillance DISP peut être complètement indépendant de tout système embarqué de l'aéronef 600. Dans ces exemples, le dispositif de surveillance DISP peut faire partie d'un système hors-bord, tel qu'un dispositif d'entretien portable, qui peut ou non être capable de communiquer avec les systèmes embarqués de l'aéronef 600, ou il peut comprendre un système embarqué séparé. Dans ces exemples, le dispositif de surveillance DISP est doté de moyens appropriés pour recevoir des commandes de contrôle et/ou pour fournir des valeurs de température estimées, tels qu'un écran ou une interface utilisateur.

## Revendications

1. Procédé de surveillance d'une température maximale atteinte pendant un atterrissage par un frein d'un train d'atterrissage d'un aéronef, le procédé étant implémenté par un dispositif de surveillance (DISP), ledit procédé comportant :
une phase d'utilisation (PHS_UT) d'un modèle de prédiction d'une température maximale atteinte par le frein pendant l'atterrissage comportant les étapes suivantes
- obtenir un ensemble courant de valeurs d'une pluralité de paramètres de freinage, pour un atterrissage courant ;
- estimer (102), grâce au modèle de prédiction, une température maximale pendant l'atterrissage qui devrait être atteinte par ledit frein, à partir des valeurs dudit ensemble courant ;
ledit procédé comportant en outre une phase de comparaison comprenant :
- obtenir une température maximale mesurée atteinte par le frein pendant l'atterrissage courant ;
**caractérisé en ce que** ledit procédé comprend les étapes suivantes :
- déterminer (104) si une erreur entre la température maximale estimée et la température maximale mesurée est supérieure à un premier seuil prédéfini S1, lorsque la température maximale mesurée est supérieure à la température maximale estimée, ou à un deuxième seuil prédéfini S2, lorsque la température maximale mesurée est inférieure à la température maximale estimée;
- lorsque l'erreur est supérieure au premier seuil prédéfini S1 ou au deuxième seuil prédéfini S2, déterminer (105) si, sur un ensemble d'atterrissages comprenant un nombre N d'atterrissages d'une fenêtre glissante et l'atterrissage courant, un nombre total d'erreurs (NT) est supérieur à un troisième seuil prédéfini S3, sinon réitérer la phase d'utilisation du modèle de prédiction et la phase de comparaison pour un atterrissage suivant;
- lorsque le nombre total d'erreurs (NT) est supérieure au troisième seuil prédéfini S3, générer (106) un message d'alerte, sinon réitérer la phase d'utilisation (PHS_UT) du modèle de prédiction et la phase de comparaison pour un atterrissage suivant.

2. Procédé selon la revendication 1, comportant en outre, préalablement à la phase d'utilisation (PHS_UT) du modèle de prédiction : une phase d'entrainement (PHS_E) d'un modèle d'apprentissage automatique comportant : associer un jeu de valeurs de référence de paramètres de freinage qui a été obtenu pour chaque atterrissage d'un ensemble d'atterrissages de référence avec une valeur de référence de température maximale qui a été atteinte par le frein du train d'atterrissage lors de l'atterrissage en question.

3. Procédé de surveillance selon les revendications 1 ou 2, dans lequel estimer la température maximale atteinte par le frein pour l'atterrissage courant, à partir des valeurs de l'ensemble de paramètres de freinage courant, comprend en outre : calculer une somme pondérée entre la température maximale estimée pour le frein et une température maximale estimée pour un autre frein du train d'atterrissage.

4. Procédé de surveillance selon la revendication 3, comportant en outre, déterminer une température estimée synthétique comme la somme pondérée d'une moyenne glissante, sur la fenêtre glissante de N atterrissages, de la température maximale estimée du frein et d'une température mesurée de l'autre frein du train d'atterrissage.

5. Procédé de surveillance selon la revendication 4, dans lequel, l'erreur entre la température maximale estimée et la température maximale mesurée est calculée comme une somme pondérée entre une erreur absolue moyenne (MAE) entre une moyenne glissante, sur la fenêtre glissante de N atterrissages, de la température maximale atteinte par le frein et la température estimée synthétique, et une erreur absolue moyenne symétrique en pourcentage (SMAPE) entre la moyenne glissante, sur la fenêtre glissante de N atterrissages, de la température maximale atteinte par le frein et la température estimée synthétique.

6. Procédé de surveillance selon les revendications 1 à 5, dans lequel les paramètres de freinage sont parmi : une énergie de freinage, une puissance maximale de freinage, une durée d'activation des ventilateurs de frein, une durée d'inversion de la poussée des moteurs, une durée de l'atterrissage, une température initiale du frein, une durée entre un moment où la température maximale du frein est atteinte et un moment où une vitesse de rotation de la roue atteint la valeur du percentile de 95 %, une température de l'air statique, une moyenne de la vitesse au sol, une valeur maximale de la vitesse au sol, une somme des courants appliqués par une servovalve du système de freinage, une altitude moyenne , un numéro de série de fabricant de l'aéronef, un identifiant de type de moteur de l'aéronef, un identifiant de modèle d'aéronef.

7. Procédé de surveillance selon les revendications 1 à 6, dans lequel le message d'alerte comporte une indication qu'une action ou une vérification de maintenance doit être effectuée sur le frein, et une indication d'un type d'action ou de vérification de maintenue à effectuer.

8. Procédé de surveillance selon la revendication 7, comportant en outre adapter le message d'alerte en indiquant :
- une information sur une première catégorie de problème et une information sur une première catégorie d'action ou de vérification de maintenance à effectuer qui est adaptée à la première catégorie de problème, lorsque la température maximale mesurée est supérieure à la température maximale estimée et que l'erreur entre la température maximale estimée et la température maximale mesurée est supérieure au premier seuil prédéfini S1, ou
- une information sur une deuxième catégorie de problème et une information sur une deuxième catégorie d'action ou de vérification de maintenance à effectuer qui est adaptée à la deuxième catégorie de problème, lorsque la température maximale mesurée est inférieure à la température maximale estimée et que l'erreur entre la température maximale estimée et la température maximale mesurée est supérieure au deuxième seuil prédéfini S2.

9. Dispositif de surveillance (DISP) d'une température maximale atteinte pendant un atterrissage par un frein d'un train d'atterrissage d'un aéronef, le dispositif de surveillance (DISP) comportant de la circuiterie électronique configurée pour implémenter :
une phase d'utilisation (PHS_UT) d'un modèle de prédiction d'une température maximale atteinte par le frein pendant l'atterrissage comportant les étapes suivantes
- obtenir un ensemble courant de valeurs d'une pluralité de paramètres de freinage, pour un atterrissage courant ;
- estimer (102), grâce au modèle de prédiction, une température maximale pendant l'atterrissage qui devrait être atteinte par ledit frein, à partir des valeurs dudit ensemble courant ;
ledit procédé comportant en outre une phase de comparaison comprenant :
- obtenir une température maximale mesurée atteinte par le frein pendant l'atterrissage courant ;
**caractérisé en ce que** ledit dispositif de surveillance (DISP) comprend les étapes suivantes :
- déterminer (104) si une erreur entre la température maximale estimée et la température maximale mesurée est supérieure à un premier seuil prédéfini S1, lorsque la température maximale mesurée est supérieure à la température maximale estimée, ou à un deuxième seuil prédéfini S2, lorsque la température maximale mesurée est inférieure à la température maximale estimée;
- lorsque l'erreur est supérieure au premier seuil prédéfini S1 ou au deuxième seuil prédéfini S2, déterminer (105) si, sur un ensemble d'atterrissages comprenant un nombre N d'atterrissages d'une fenêtre glissante et l'atterrissage courant, un nombre total d'erreurs (NT) est supérieur à un troisième seuil prédéfini S3, sinon réitérer la phase d'utilisation du modèle de prédiction et la phase de comparaison pour un atterrissage suivant;
- lorsque le nombre total d'erreurs (NT) est supérieur au troisième seuil prédéfini S3, générer (106) un message d'alerte, sinon réitérer la phase d'utilisation (PHS_UT) du modèle de prédiction et la phase de comparaison pour un atterrissage suivant.

10. Aéronef (600) comportant un dispositif de surveillance (DISP) selon la revendication 9.

## Patentansprüche

1. Verfahren zur Überwachung einer maximalen Temperatur, die während einer Landung von einer Bremse eines Fahrgestells eines Flugzeugs erreicht wird, wobei das Verfahren von einer Überwachungsvorrichtung (DISP) implementiert wird, das Verfahren umfassend:
eine Phase des Verwendens (PHS_UT) eines Vorhersagemodells für eine maximale Temperatur, die von der Bremse während der Ladung erreicht wird, umfassend die folgenden Schritte
- Ermitteln einer aktuellen Menge von Werten einer Mehrzahl von Bremsparametern für eine aktuelle Landung;
- Schätzen (102), anhand des Vorhersagemodells, einer maximalen Temperatur während der Landung, die von der Bremse erreicht werden sollte, ausgehend von den Werten der aktuellen Menge;
wobei das Verfahren ferner eine Phase des Vergleichens umfasst, die beinhaltet:
- Ermitteln einer gemessenen maximalen Temperatur, die von der Bremse während der aktuellen Landung erreicht wird;
**dadurch gekennzeichnet, dass** das Verfahren die folgenden Schritte beinhaltet:
- Bestimmen (104), ob ein Fehler zwischen der geschätzten maximalen Temperatur und der gemessenen maximalen Temperatur größer als ein erster vordefinierter Schwellenwert S1 ist, wenn die gemessene maximale Temperatur höher als die geschätzte maximale Temperatur ist, oder als ein zweiter vordefinierter Schwellenwert S2, wenn die gemessene maximale Temperatur geringer als die geschätzte maximale Temperatur ist;
- wenn der Fehler größer als der erste vordefinierte Schwellenwert S1 oder der zweite vordefinierte Schwellenwert S2 ist, Bestimmen (105), ob bei einer Menge von Landungen, die eine Anzahl N von Landungen eines gleitenden Fensters und die aktuelle Landung umfasst, eine Gesamtzahl von Fehlern (NT) größer als ein dritter vordefinierter Schwellenwert S3 ist, andernfalls Wiederholen der Phase des Verwendens des Vorhersagemodells und der Phase des Vergleichens bei einer folgenden Landung;
- wenn die Gesamtzahl von Fehlern (NT) größer als der dritte vordefinierte Schwellenwert S3 ist, Erzeugen (106) einer Warnmeldung, andernfalls Wiederholen der Phase des Verwendens (PHS_UT) des Vorhersagemodells und der Phase des Vergleichens bei einer folgenden Landung.

2. Verfahren nach Anspruch 1, umfassend ferner, vor der Phase des Verwendens des Vorhersagemodells (PHS_UT) : eine Phase des Trainierens (PHS_E) eines Modells für maschinelles Lernen, umfassend: Verknüpfen eines Satzes von Referenzwerten von Bremsparametern, der für jede Landung einer Menge von Referenzlandungen ermittelt wurde, mit einem Referenzwert einer maximalen Temperatur, die von der Bremse des Fahrgestells bei der betreffenden Landung erreicht worden ist.

3. Verfahren zur Überwachung nach den Ansprüchen 1 oder 2, wobei dem das Schätzen der von der Bremse bei der aktuellen Landung erreichten maximalen Temperatur ausgehend von den Werten der aktuellen Menge von Bremsparametern ferner umfasst: Berechnen einer gewichteten Summe zwischen der geschätzten maximalen Temperatur für die Bremse und einer geschätzten maximalen Temperatur für eine andere Bremse des Fahrgestells.

4. Verfahren zur Überwachung nach Anspruch 3, umfassend ferner das Bestimmen einer synthetischen geschätzten Temperatur als die gewichtete Summe eines gleitenden Mittelwerts, über das gleitende Fenster von N Landungen, der geschätzten maximalen Temperatur der Bremse und einer gemessenen Temperatur der anderen Bremse des Fahrgestells.

5. Verfahren zur Überwachung nach Anspruch 4, wobei der Fehler zwischen der geschätzten maximalen Temperatur und der gemessenen maximalen Temperatur berechnet wird als eine gewichtete Summe zwischen einem mittleren absoluten Fehler (MAE) zwischen einem gleitenden Mittelwert, über das gleitende Fenster von N Landungen, der von der Bremse erreichten maximalen Temperatur und der synthetischen geschätzten Temperatur und einem symmetrischen mittleren absoluten prozentualen Fehler (SMAPE) zwischen dem gleitenden Mittelwert, über das gleitende Fenster von N Landungen, der von der Bremse erreichten maximalen Temperatur und der geschätzten synthetischen Temperatur.

6. Verfahren zur Überwachung nach den Ansprüchen 1 bis 5, wobei die Bremsparameter zu den Folgenden gehören: eine Bremsenergie, eine maximale Bremsleistung, eine Aktivierungsdauer der Bremslüfter, eine Dauer der Schubumkehr der Triebwerke, eine Dauer der Landung, eine Ausgangstemperatur der Bremse, eine Dauer zwischen einem Zeitpunkt, zu dem die maximale Bremstemperatur erreicht ist, und einem Zeitpunkt, zu dem eine Drehzahl des Rads den Wert des Perzentils von 95 % erreicht, eine Temperatur der statischen Luft, ein Mittelwert der Geschwindigkeit am Boden, ein maximaler Wert der Geschwindigkeit am Boden, eine Summe der von einem Servoventil des Bremssystems angewandten Ströme, eine mittlere Höhe, eine Seriennummer des Herstellers des Flugzeugs, eine Triebwerkstypkennung des Flugzeugs, eine Flugzeugmodellkennung.

7. Verfahren zur Überwachung nach den Ansprüchen 1 bis 6, wobei die Warnmeldung eine Angabe, dass eine Instandhaltungsmaßnahme oder -überprüfung an der Bremse durchgeführt werden muss, und eine Angabe eines Typs einer durchzuführenden Maßnahme oder Wartungsüberprüfung umfasst.

8. Verfahren zur Überwachung nach Anspruch 7, umfassend ferner das Anpassen der Warnmeldung, indem angegeben wird:
- eine Information über eine erste Problemkategorie und eine Information über eine erste Kategorie einer durchzuführenden Instandhaltungsmaßnahme oder - überprüfung, die an die erste Problemkategorie angepasst ist, wenn die gemessene maximale Temperatur größer als die geschätzte maximale Temperatur ist und der Fehler zwischen der geschätzten maximalen Temperatur und der gemessenen maximalen Temperatur größer als der erste vordefinierte Schwellenwert S1 ist, oder
- eine Information über eine zweite Problemkategorie und eine Information über eine zweite Kategorie einer durchzuführenden Instandhaltungsmaßnahme oder - überprüfung, die an die zweite Problemkategorie angepasst ist, wenn die gemessene maximale Temperatur geringer als die geschätzte maximale Temperatur ist und der Fehler zwischen der geschätzten maximalen Temperatur und der gemessenen maximalen Temperatur größer als der zweite vordefinierte Schwellenwert S2 ist.

9. Überwachungsvorrichtung (DISP) zur Überwachung einer maximalen Temperatur, die während einer Landung von einer Bremse eines Fahrgestells eines Flugzeugs erreicht wird, wobei die Überwachungsvorrichtung (DISP) eine elektronische Schaltungsanordnung umfasst, die dazu ausgestaltet ist, Folgendes zu implementieren:
eine Phase des Verwendens (PHS_UT) eines Vorhersagemodells für eine maximale Temperatur, die von der Bremse während der Ladung erreicht wird, umfassend die folgenden Schritte
- Ermitteln einer aktuellen Menge von Werten einer Mehrzahl von Bremsparametern für eine aktuelle Landung;
- Schätzen (102), anhand des Vorhersagemodells, einer maximalen Temperatur während der Landung, die von der Bremse erreicht werden sollte, ausgehend von den Werten der aktuellen Menge;
wobei das Verfahren ferner eine Phase des Vergleichens umfasst, die beinhaltet:
- Ermitteln einer gemessenen maximalen Temperatur, die von der Bremse während der aktuellen Landung erreicht wird;
**dadurch gekennzeichnet, dass** die Überwachungsvorrichtung (DISP) die folgenden Schritte beinhaltet:
- Bestimmen (104), ob ein Fehler zwischen der geschätzten maximalen Temperatur und der gemessenen maximalen Temperatur größer als ein erster vordefinierter Schwellenwert S1 ist, wenn die gemessene maximale Temperatur höher als die geschätzte maximale Temperatur ist, oder als ein zweiter vordefinierter Schwellenwert S2, wenn die gemessene maximale Temperatur geringer als die geschätzte maximale Temperatur ist;
- wenn der Fehler größer als der erste vordefinierte Schwellenwert S1 oder der zweite vordefinierte Schwellenwert S2 ist, Bestimmen (105), ob bei einer Menge von Landungen, die eine Anzahl N von Landungen eines gleitenden Fensters und die aktuelle Landung umfasst, eine Gesamtzahl von Fehlern (NT) größer als ein dritter vordefinierter Schwellenwert S3 ist, andernfalls Wiederholen der Phase des Verwendens des Vorhersagemodells und der Phase des Vergleichens bei einer folgenden Landung;
- wenn die Gesamtzahl von Fehlern (NT) größer als der dritte vordefinierte Schwellenwert S3 ist, Erzeugen (106) einer Warnmeldung, andernfalls Wiederholen der Phase des Verwendens (PHS_UT) des Vorhersagemodells und der Phase des Vergleichens bei einer folgenden Landung.

10. Flugzeug (600), das eine Überwachungsvorrichtung (DISP) nach Anspruch 9 umfasst.

## Claims

1. Method for monitoring a maximum temperature reached during landing by a brake of landing gear of an aircraft, the method being implemented by a monitoring device (DISP), said method comprising:
a phase (PHS_UT) of using a prediction model to predict a maximum temperature reached by the brake during landing, comprising the following steps:
- obtaining a current set of values of a plurality of braking parameters, for a current landing;
- estimating (102), by virtue of the prediction model, a maximum temperature that should be reached by said brake during landing, on the basis of the values of said current set;
said method further comprising a comparing phase comprising:
- obtaining a measured maximum temperature reached by the brake during the current landing;
**characterized in that** said method comprises the following steps:
- determining (104) whether an error between the estimated maximum temperature and the measured maximum temperature is greater than a first predefined threshold S1, when the measured maximum temperature is greater than the estimated maximum temperature, or a second predefined threshold S2, when the measured maximum temperature is less than the estimated maximum temperature;
- when the error is greater than the first predefined threshold S1 or second predefined threshold S2, determining (105) whether, in a set of landings containing a number N of landings in a sliding window and the current landing, a total number of errors (NT) is greater than a third predefined threshold S3, otherwise reiterating the phase of using the prediction model and the comparing phase for a subsequent landing;
- when the total number of errors (NT) is greater than the third predefined threshold S3, generating (106) a warning message, otherwise reiterating the phase (PHS_UT) of using the prediction model and the comparing phase for a subsequent landing.

2. Method according to Claim 1, further comprising, prior to the phase (PHS_UT) of using the prediction model: a phase (PHS_E) of training a machine-learning model comprising: associating a set of reference values of brake parameters that was obtained for each landing of a set of reference landings with a reference maximum-temperature value that was reached by the brake of the landing gear during the landing in question.

3. Monitoring method according to Claim 1 or 2, wherein estimating the maximum temperature reached by the brake for the current landing, on the basis of the values of the current set of braking parameters, further comprises: computing a weighted sum between the maximum temperature estimated for the brake and a maximum temperature estimated for another brake of the landing gear.

4. Monitoring method according to Claim 3, further comprising determining a synthetic estimated temperature by taking the weighted sum of a moving average, over the sliding window of N landings, of the estimated maximum temperature of the brake and of a measured temperature of the other brake of the landing gear.

5. Monitoring method according to Claim 4, wherein the error between the estimated maximum temperature and the measured maximum temperature is computed by taking a weighted sum of a mean absolute error (MAE) between a moving average, over the sliding window of N landings, of the maximum temperature reached by the brake and the synthetic estimated temperature, and of a symmetric mean absolute percentage error (SMAPE) between the moving average, over the sliding window of N landings, of the maximum temperature reached by the brake and the synthetic estimated temperature.

6. Monitoring method according to Claims 1 to 5, wherein the braking parameters are one or more of: a braking energy, a maximum braking power, a duration of activation of the brake fans, a duration of reversal of the thrust of the engines, a duration of the landing, an initial temperature of the brake, a length of time between a time when the maximum brake temperature is reached and a time when a speed of rotation of the wheel reaches the percentile value of 95%, a static air temperature, an average ground speed, a maximum ground-speed value, a sum of the currents applied by a servovalve of the braking system, an average altitude, a manufacturer's serial number of the aircraft, an identifier of the engine type of the aircraft, an identifier of the model of the aircraft.

7. Monitoring method according to Claims 1 to 6, wherein the warning message contains an indication that a maintenance action or check must be performed on the brake, and an indication of a type of maintenance action or check to be performed.

8. Monitoring method according to Claim 7, further comprising configuring the warning message so that it indicates:
- information on a first category of problem and information on a first category of maintenance action or check to be performed that is appropriate for the first category of problem, when the measured maximum temperature is greater than the estimated maximum temperature and when the error between the estimated maximum temperature and the measured maximum temperature is greater than the first predefined threshold S1, or
- information on a second category of problem and information on a second category of maintenance action or check to be performed that is appropriate for the second category of problem, when the measured maximum temperature is less than the estimated maximum temperature and when the error between the estimated maximum temperature and the measured maximum temperature is greater than the second predefined threshold S2.

9. Device (DISP) for monitoring a maximum temperature reached during landing by a brake of landing gear of an aircraft, the monitoring device (DISP) comprising electronic circuitry configured to implement:
a phase (PHS_UT) of using a prediction model to predict a maximum temperature reached by the brake during landing, comprising the following steps:
- obtaining a current set of values of a plurality of braking parameters, for a current landing;
- estimating (102), by virtue of the prediction model, a maximum temperature that should be reached by said brake during landing, on the basis of the values of said current set;
said method further comprising a comparing phase comprising:
- obtaining a measured maximum temperature reached by the brake during the current landing;
**characterized in that** said monitoring device (DISP) comprises the following steps:
- determining (104) whether an error between the estimated maximum temperature and the measured maximum temperature is greater than a first predefined threshold S1, when the measured maximum temperature is greater than the estimated maximum temperature, or a second predefined threshold S2, when the measured maximum temperature is less than the estimated maximum temperature;
- when the error is greater than the first predefined threshold S1 or second predefined threshold S2, determining (105) whether, in a set of landings containing a number N of landings in a sliding window and the current landing, a total number of errors (NT) is greater than a third predefined threshold S3, otherwise reiterating the phase of using the prediction model and the comparing phase for a subsequent landing;
- when the total number of errors (NT) is greater than the third predefined threshold S3, generating (106) a warning message, otherwise reiterating the phase (PHS_UT) of using the prediction model and the comparing phase for a subsequent landing.

10. Aircraft (600) comprising a monitoring device (DISP) according to Claim 9.
